# DEMANDE DE BREVET EUROPEEN

(11) **EP 4 756 277 A1**
(43) Date de publication de la demande: **10.06.2026**
(21) Numéro de dépôt: 25216136.9
(22) Date de dépôt: 17.11.2025
(51) Int. Cl.: F16L 23/028, F16L 23/04, F16L 23/22

(54) **DISPOSITIF DE RACCORDEMENT D'UNE CANALISATION COMPRENANT AU MOINS UN MANCHON PARTIELLEMENT LOGÉ DANS AU MOINS UNE GOULOTTE FIXE**

(30) Priorité: 05.12.2024 FR 2413532
(71) Demandeur: AIRBUS OPERATIONS (S.A.S.), 31060 Toulouse (FR)
(72) Inventeur: PEREZ, Benoit, TOULOUSE (FR); DE KERGOMMEAU, Matthieu, TOULOUSE (FR)
(74) Mandataire: Airbus-OPS SAS

(57) **Abrégé**

L'invention a pour objet un dispositif de raccordement comprenant :
- au moins un premier tronçon de conduit (44),
- au moins un manchon (46) pourvu d'une collerette de manchon (50.1) à une de ses extrémités,
- un premier système de connexion (48) reliant le manchon (46) et le premier tronçon de conduit (44) et comportant :
∘ au moins une goulotte fixe (56) reliée au premier tronçon de conduit (44) et configurée pour partiellement loger au moins la première collerette de manchon (50.1) du manchon (46),
∘ au moins une butée amovible (58) configurée pour occuper un état assemblé dans lequel elle est reliée au premier tronçon de conduit (44) et maintient une partie de la première collerette de manchon (50.1) du manchon (46) dans la goulotte fixe (56) ainsi qu'un état désassemblé dans lequel elle n'est plus reliée au premier tronçon de conduit (44).

## Description

La présente demande se rapporte à un dispositif de raccordement d'une canalisation comprenant au moins un manchon partiellement logé dans au moins une goulotte fixe ainsi qu'à un aéronef comportant au moins une telle canalisation équipée d'un tel dispositif de raccordement.

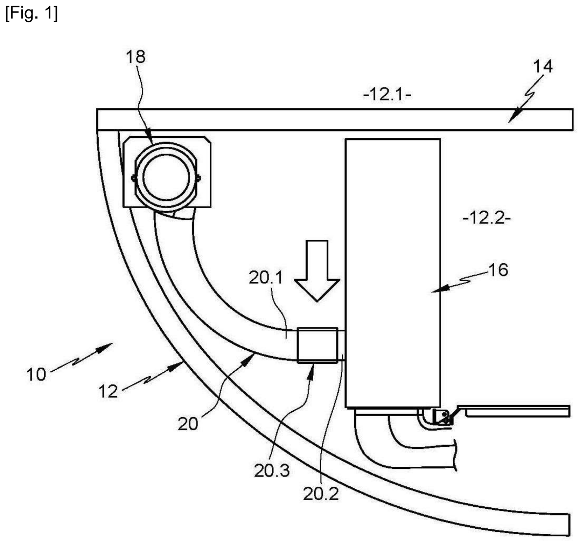

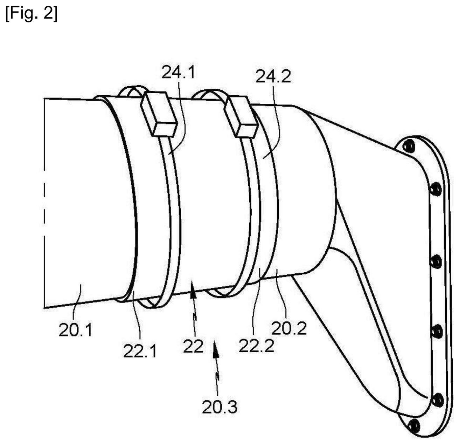

Selon un mode de réalisation visible sur la figure 1, un aéronef 10 comprend un fuselage 12 ainsi qu'un plancher 14 situé dans le fuselage 12, scindant ce dernier en une zone supérieure 12.1 et une zone inférieure 12.2 comme une soute avionique par exemple. L'aéronef 10 comprend au moins un meuble 16 situé dans la zone inférieure 12.2, un système de ventilation 18 ainsi qu'au moins une canalisation 20 reliant le système de ventilation 18 et le meuble 16. Cette canalisation 20 comprend au moins un premier conduit rigide 20.1 relié au système de ventilation 18, au moins un deuxième conduit rigide 20.2 relié au meuble 16 ainsi qu'au moins un dispositif de raccordement 20.3 reliant les premier et deuxième conduits rigides 20.1, 20.2. Selon une configuration visible sur la figure 2, les premier et deuxième conduits rigides 20.1, 20.2 comprennent respectivement des première et deuxième extrémités tubulaires. Le dispositif de raccordement 20.3 comprend au moins un manchon 22 qui présente une première extrémité 22.1 emmanchée autour de la première extrémité tubulaire du premier conduit rigide 20.1 et une deuxième extrémité 22.2 emmanchée autour de la deuxième extrémité tubulaire du deuxième conduit rigide 20.2 ainsi que des premier et deuxième colliers de serrage 24.1, 24.2 enserrant les première et deuxième extrémités 22.1, 22.2 du manchon 22 sur les première et deuxième extrémités tubulaires des premier et deuxième conduits rigides 20.1, 20.2.

Ce manchon 22 n'est pas compressible entre ses première et deuxième extrémités 22.1, 22.2 et nécessite d'importantes zones de dégagement pour pouvoir être mis en place. Or, pour certaines applications, le dispositif de raccordement 20.3 est situé dans une zone exiguë rendant difficile sa mise en place.

La présente invention vise à remédier à tout ou partie des inconvénients de l'art antérieur.

A cet effet, l'invention a pour objet un dispositif de raccordement comprenant au moins un premier tronçon de conduit, au moins un manchon qui présente un axe longitudinal et s'étend entre des première et deuxième extrémités, ainsi qu'un premier système de connexion reliant le manchon et le premier tronçon de conduit.

Selon l'invention, le manchon comprend au moins une première collerette de manchon positionnée à une des première et deuxième extrémités. En complément, le premier système de connexion comprend au moins une goulotte fixe reliée au premier tronçon de conduit, ouverte en direction de l'axe longitudinal et configurée pour partiellement loger au moins la première collerette de manchon, ainsi qu'au moins une butée amovible configurée pour occuper un état assemblé dans lequel ladite butée amovible est reliée au premier tronçon de conduit et maintient une partie de la première collerette de manchon dans la goulotte fixe et un état désassemblé dans lequel la butée amovible n'est plus reliée au premier tronçon de conduit et permet à la partie de la première collerette de manchon positionnée dans la goulotte fixe de sortir de ladite goulotte fixe.

Cette conception du manchon et du système de connexion simplifie la mise en place du manchon, et ce même dans une zone exiguë comme le raccordement d'une canalisation de ventilation au bas d'un meuble positionné dans une soute avionique.

Selon une autre caractéristique, la goulotte fixe comprend des première et deuxième parois ainsi qu'un fond reliant les première et deuxième parois, la première paroi étant reliée au premier tronçon de conduit.

Selon une autre caractéristique, les première et deuxième parois s'évasent en direction de l'axe longitudinal.

Selon une autre caractéristique, la butée amovible comprend une paroi latérale sensiblement parallèle à l'axe longitudinal ainsi qu'au moins une première extension configurée pour être reliée au premier tronçon de conduit lorsque la butée amovible est à l'état assemblé.

Selon une autre caractéristique, la butée amovible comprend une aile, la paroi latérale étant intercalée entre la première extension et l'aile et reliée à ces dernières.

Selon une autre caractéristique, le premier tronçon de conduit comprend une collerette de conduit. En complément, la collerette de conduit, la paroi latérale et l'aile forment une deuxième goulotte ouverte en direction de l'axe longitudinal et configurée pour partiellement loger au moins la première collerette de manchon du manchon lorsque la butée amovible est à l'état assemblé.

Selon une autre caractéristique, lorsque la butée amovible est à l'état assemblé, l'aile et la collerette de conduit s'évasent en direction de l'axe longitudinal.

Selon une autre caractéristique, le système de connexion comprend au moins un élément de liaison configuré pour relier la butée amovible et le premier tronçon de conduit. En complément, pour chaque élément de liaison, la butée amovible et le premier tronçon de conduit comprennent respectivement des première et deuxième extensions qui comportent chacune un orifice traversant traversé par l'élément de liaison.

Selon une autre caractéristique, le dispositif de raccordement comprend au moins un joint annulaire d'étanchéité entre le manchon et le premier tronçon de conduit.

Selon une autre caractéristique, chaque système de connexion présente un plan de symétrie vertical passant par l'axe longitudinal.

Selon une autre caractéristique, la goulotte fixe et la butée amovible s'étendent de manière continue sur toute la circonférence du manchon.

Selon une autre caractéristique, le manchon présente une section transversale oblongue comprenant deux côtés rectilignes opposés ainsi que des demi-cercles supérieur et inférieur reliant les côtés rectilignes, la goulotte fixe s'étendant sur le demi-cercle inférieur et au moins la moitié de chacun des côtés rectilignes, la butée amovible s'étendant sur le demi-cercle supérieur et sur moins de la moitié de chacun des côtés rectilignes.

Selon une autre caractéristique, le dispositif de raccordement comprend des premier et deuxième tronçons de conduit, un manchon intercalé entre les premier et deuxième tronçons de conduit, ainsi que des premier et deuxième systèmes de connexion reliant respectivement le manchon et les premier et deuxième tronçons de conduit, les premier et deuxième systèmes de connexion étant symétriques par rapport à un plan médian transversal.

Selon une autre caractéristique, le manchon comprend une partie centrale située entre les première et deuxième extrémités, extensible et configurée pour se déformer de manière élastique.

L'invention a également pour objet un aéronef comprenant au moins une canalisation pourvue d'au moins un dispositif de raccordement selon l'une des caractéristiques précédentes.

D'autres caractéristiques et avantages ressortiront de la description de l'invention qui va suivre, description donnée à titre d'exemple uniquement, en regard des dessins annexés parmi lesquels :
[Fig. 1] est une coupe transversale schématique d'une partie d'une soute avionique d'un aéronef illustrant un mode de réalisation de l'art antérieur,
[Fig. 2] est une vue en perspective d'un dispositif de raccordement illustrant un mode de réalisation de l'art antérieur,
[Fig. 3] est une coupe transversale schématique d'une partie d'une soute avionique d'un aéronef illustrant un mode de réalisation de l'invention,

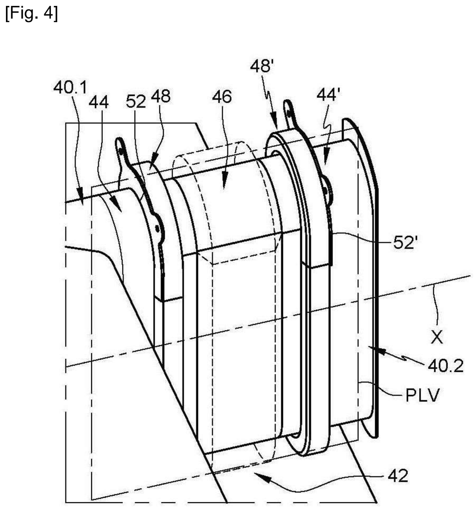

[Fig. 4] est une vue en perspective d'un dispositif de raccordement illustrant un mode de réalisation de l'invention,

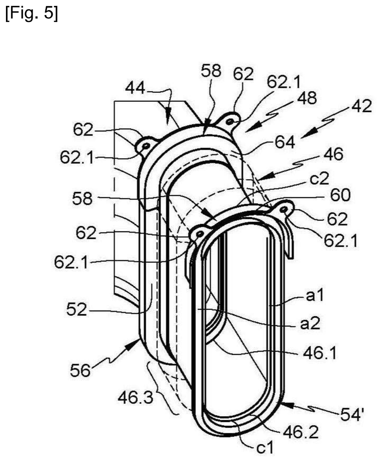

[Fig. 5] est une vue en perspective du dispositif de raccordement visible sur la figure 4, raccordé à une seule extrémité,
[Fig. 6] est une coupe longitudinale schématique d'un dispositif de raccordement illustrant un mode de réalisation de l'invention,

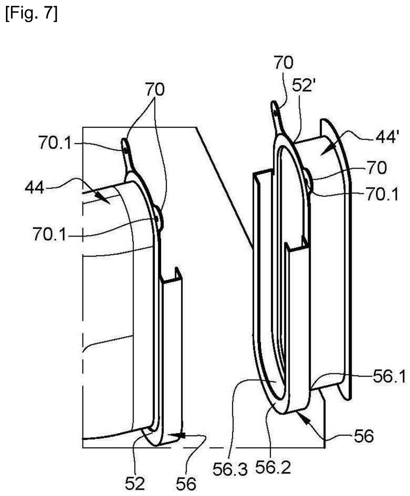

[Fig. 7] est une vue en perspective de premier et deuxième conduits rigides configurés pour être raccordés par un dispositif de raccordement illustrant un mode de réalisation de l'invention,

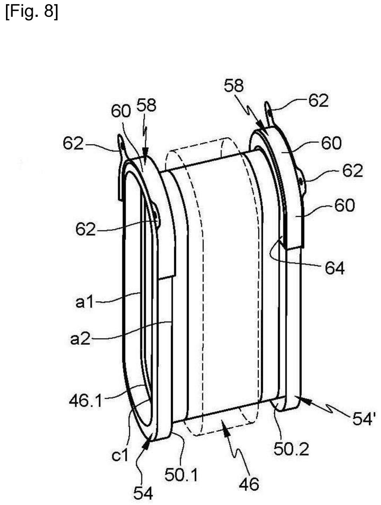

[Fig. 8] est une vue en perspective d'un manchon souple du dispositif de raccordement visible sur la figure 4 illustrant un mode de réalisation de l'invention,
[Fig. 9] est un ensemble de vues de face et en perspective du dispositif de raccordement visible sur la figure 4 à différents moments de sa mise en place.

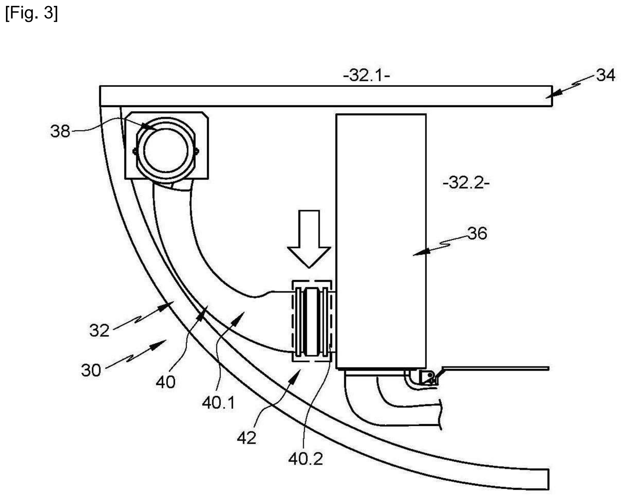

Selon un mode de réalisation visible sur la figure 3, un aéronef 30 comprend un fuselage 32 ainsi qu'un plancher 34 situé dans le fuselage 32 et scindant ce dernier en une zone supérieure 32.1 et une zone inférieure 32.2 comme une soute avionique par exemple. L'aéronef 30 comprend au moins un meuble 36 situé dans la zone inférieure 32.2, un système de ventilation 38 ainsi qu'au moins une canalisation 40 reliant le système de ventilation 38 et le meuble 36. Cette canalisation 40 comprend au moins un premier conduit rigide 40.1 relié au système de ventilation 38, au moins un deuxième conduit rigide 40.2 relié au meuble 36 ainsi qu'au moins un dispositif de raccordement 42 reliant les premier et deuxième conduits rigides 40.1, 40.2. En variante, la canalisation ne comprend pas de deuxième conduit rigide 42, le dispositif de raccordement 42 étant directement relié au meuble 36.

Bien entendu, l'invention n'est pas limitée à cette application et peut s'appliquer dans le cadre de tout équipement nécessitant une ventilation. Quelle que soit l'application, le dispositif de raccordement 42 comprend au moins un premier tronçon de conduit 44, au moins un manchon 46 ainsi qu'un premier système de connexion 48 reliant le manchon 46 et le premier tronçon de conduit 44.

Selon une application privilégiée, le dispositif de raccordement 42 comprend des premier et deuxième tronçons de conduit 44, 44' espacés entre eux (solidaires respectivement des premier et deuxième conduits rigides 40.1, 40.2 dans le cas de la canalisation 40), au moins un manchon 46 intercalé entre les premier et deuxième tronçons de conduit 44, 44' ainsi que des premier et deuxième systèmes de connexion 48, 48' reliant respectivement le manchon 46 et les premier et deuxième tronçons de conduit 44, 44'.

Le manchon 46 présente un axe longitudinal X. Les premier et deuxième tronçons de conduit 44, 44' ainsi que le manchon 46 sont alignés selon l'axe longitudinal X. Un plan transversal est perpendiculaire à l'axe longitudinal X. Un plan longitudinal vertical PLV est un plan contenant l'axe longitudinal X et vertical.

Selon une configuration, les premier et deuxième tronçons de conduit 44, 44' ainsi que le manchon 46 présentent chacun une section transversale (prise dans un plan transversal) oblongue ayant une grande dimension orientée selon la direction verticale. Selon cette configuration, chaque section transversale oblongue comprend deux côtés rectilignes a1, a2 opposés et deux demi-cercles c1, c2 reliant les côtés rectilignes a1, a2. Dans le cas d'une forme oblongue, l'axe longitudinal X est situé à équidistance des deux côtés rectilignes a1, a2 et des deux demi-cercles c1, c2.

Bien entendu, l'invention n'est pas limitée à cette forme pour les sections transversales. En variante, les sections transversales pourraient être circulaires, approximativement carrées ou présenter toute autre forme.

Selon un mode de réalisation, le manchon 46 s'étend entre des première et deuxième extrémités 46.1, 46.2 et comprend au moins une collerette de manchon 50.1 positionnée à une des première et deuxième extrémités 46.1, 46.2. Selon une configuration privilégiée, le manchon 46 comprend des première et deuxième collerettes de manchon 50.1, 50.2 situées respectivement au niveau des première et deuxième extrémités 46.1, 46.2 et positionnées dans des plans transversaux. Les première et deuxième collerettes de manchon 50.1, 50.2 comprennent respectivement des faces de contact F50.1, F50.2 orientées respectivement vers les premier et deuxième tronçons de conduit 44, 44'.

Selon un mode de réalisation privilégié, le manchon 46 comprend une partie centrale 46.3 située entre les première et deuxième extrémités 46.1, 46.2, distante desdites première et deuxième extrémités 46.1, 46.2, extensible et configurée pour se déformer de manière élastique. Selon une configuration, la partie centrale 46.3 du manchon 46 comprend un soufflet. Cette configuration permet de compenser d'éventuelles différences d'écartement entre les premier et deuxième tronçons de conduit 44, 44' d'un aéronef à l'autre ou au cours de l'exploitation de l'aéronef dans lequel est installé le manchon 46.

Selon un mode de réalisation, le manchon 46 est réalisé au moins en partie en élastomère, notamment au niveau de la partie centrale 46.3.

Bien entendu, l'invention n'est pas limitée à ce mode de réalisation pour le manchon 46. Ainsi, l'une des extrémités du manchon 46 pourrait être différente et ne comprendre aucune collerette.

Selon un mode de réalisation, au moins l'un des premier et deuxième tronçons de conduit 44, 44' comprend une extrémité, orientée vers le manchon 46, qui présente une collerette de conduit 52 positionnée dans un plan transversal et comprenant une face de contact F52 orientée vers le manchon 46. Selon une configuration, le premier tronçon de conduit 44 comprend une première collerette de conduit 52 présentant une face de contact F52 orientée vers celle de la première collerette de manchon 50.1 du manchon 46 et le deuxième tronçon de conduit 44' comprend une deuxième collerette de conduit 52' présentant une face de contact F52' orientée vers celle de la deuxième collerette de manchon 50.2 du manchon 46.

Selon un mode de réalisation, le dispositif de raccordement 42 comprend au moins un joint annulaire d'étanchéité 54 intercalé entre le manchon 46 et le premier tronçon de conduit 44, plus particulièrement entre au moins un couple de collerettes parmi les premières collerettes de manchon et de conduit 50.1, 52 et les deuxièmes collerettes de manchon et de conduit 50.2, 52'. Selon une configuration, le dispositif de raccordement 42 comprend un premier joint annulaire d'étanchéité 54 intercalé entre la première collerette de manchon 50.1 et la première collerette de conduit 52 ainsi qu'un deuxième joint annulaire d'étanchéité 54' intercalé entre la deuxième collerette de manchon 50.2 et la deuxième collerette de conduit 52'.

Les premier et deuxième tronçons de conduit 44, 44' ainsi que les première et deuxième extrémités 46.1, 46.2 du manchon 46 présentent sensiblement la même section intérieure. Chaque joint annulaire d'étanchéité 54, 54' comprend une section intérieure supérieure à celle des premier et deuxième tronçons de conduit 44, 44' ainsi que des première et deuxième extrémités 46.1, 46.2 du manchon 46.

Bien entendu, l'invention n'est pas limitée à ce mode de réalisation. En variante, au moins l'une des première et deuxième collerettes de manchon 50.1, 50.2 pourrait être directement plaquée contre la première ou deuxième collerette de conduit 52, 52' du premier ou deuxième tronçon de conduit 44, 44'.

Selon une particularité de l'invention, au moins un des premier et deuxième systèmes de connexion 48, 48' comprend :
a. au moins une goulotte fixe 56 reliée au premier ou deuxième tronçon de conduit 44, 44', ouverte en direction de l'axe longitudinal X et configurée pour loger partiellement au moins la première ou deuxième collerette de manchon 50.1, 50.2 du manchon 46 et un éventuel joint annulaire d'étanchéité 54, 54',
b. au moins une butée amovible 58 configurée pour occuper :
   i. un état assemblé dans lequel ladite butée amovible 58 est reliée au premier ou deuxième tronçon de conduit 44, 44' et maintient une partie de la première ou deuxième collerette de manchon 50.1, 50.2 du manchon 46 dans la goulotte fixe 56,
   ii. un état désassemblé dans lequel la butée amovible 58 n'est plus reliée au premier ou deuxième tronçon de conduit 44, 44' et permet à la partie de la première ou deuxième collerette de manchon 50.1, 50.2 du manchon 46 positionné dans ladite goulotte fixe 56 de sortir de ladite goulotte fixe 56.

Lorsqu'une partie du manchon 46 est positionnée dans la goulotte fixe 56 solidaire du premier ou deuxième tronçon de conduit 44, 44', le manchon 46 et le premier ou deuxième tronçon de conduit 44, 44' sont immobilisés l'un par rapport à l'autre selon une direction parallèle à l'axe longitudinal X.

Lorsqu'elle est dans l'état assemblé, la butée amovible 58 immobilise le manchon 46 par rapport au premier ou deuxième tronçon de conduit 44, 44' en translation selon une direction transversale DT.

Selon une configuration, les premier et deuxième systèmes de connexion 48, 48' sont symétriques par rapport à un plan médian transversal PMT. En variante, les premier et deuxième systèmes de connexion 48, 48' pourraient être différents.

Pour la suite de la description, seul le premier système de connexion 48 est décrit, le deuxième système de connexion 48' pouvant être identique ou différent.

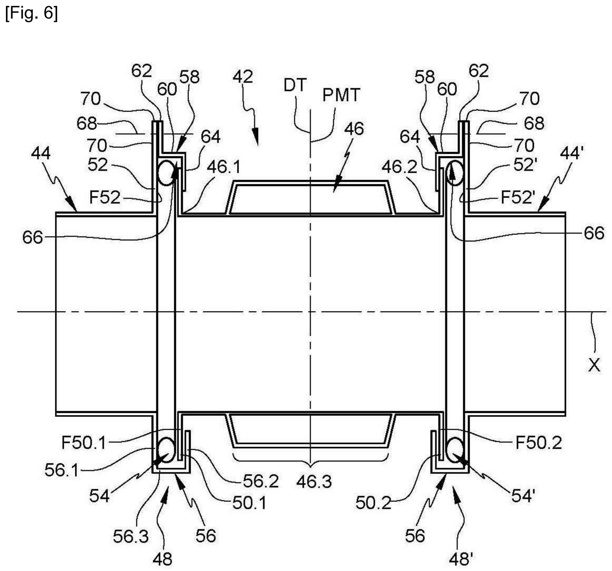

Selon un mode de réalisation visible par exemple sur la figure 6, la goulotte fixe 56, la collerette de conduit 52 et le premier tronçon de conduit 44 sont réalisés d'un seul tenant et ne forment qu'une même et unique pièce.

La goulotte fixe 56 présente dans un plan longitudinal une section en U ou en V et comprend des première et deuxième parois 56.1, 56.2 ainsi qu'un fond 56.3 reliant les première et deuxième parois 56.1, 56.2, le fond 56.3 étant plus écarté de l'axe longitudinal X que les première et deuxième parois 56.1, 56.2. La première paroi 56.1 est reliée au premier ou deuxième tronçon de conduit 44, 44' et correspond à une partie de la collerette de conduit 52. Selon une configuration, les première et deuxième parois 56.1, 56.2 s'évasent vers l'intérieur du manchon 46, en direction de l'axe longitudinal X. En présence d'un joint annulaire d'étanchéité 54, cette configuration permet une légère compression de ce dernier lors de la mise en place du joint annulaire d'étanchéité 54 et du manchon 46 dans la goulotte fixe 56.

La butée amovible 58 comprend une paroi latérale 60 sensiblement parallèle à l'axe longitudinal X configuré pour bloquer le manchon 46 selon la direction transversale DT ainsi qu'au moins une première extension 62 configurée pour être reliée au premier tronçon de conduit 44, plus particulièrement à la première collerette de conduit 52, lorsque la butée amovible 58 est à l'état assemblé.

Selon un mode réalisation, la butée amovible 58 comprend une aile 64, la paroi latérale 60 étant intercalée entre la première extension 62 et l'aile 64 et reliée à ces dernières.

Lorsque la butée amovible 58 est à l'état assemblé, la collerette de conduit 52, la paroi latérale 60 et l'aile 64 forment une deuxième goulotte 66 ouverte en direction de l'axe longitudinal X, configurée pour loger partiellement au moins la première ou deuxième collerette de manchon 50.1, 50.2 du manchon 46 et un éventuel joint annulaire d'étanchéité 54, 54'. La deuxième goulotte 66 présente dans un plan longitudinal une section en U ou en V. Selon une configuration, l'aile 64 et la collerette de conduit 52 s'évasent en direction de l'axe longitudinal X. En présence d'un joint annulaire d'étanchéité 54, cette configuration permet une légère compression de ce dernier lors de la mise en place du joint annulaire d'étanchéité 54 et du manchon 46.

Selon un mode de réalisation, le système de connexion 48, 48' comprend au moins un élément de liaison 68 configuré pour relier la butée amovible 58 et la collerette de conduit 52. A titre d'exemple, chaque élément de liaison 68 est un boulon, un rivet ou autres.

Pour chaque élément de liaison 68, la butée amovible 58 comprend une première extension 62. En complément, le premier tronçon de conduit 44 comprend une deuxième extension 70 sous la forme d'une patte solidaire à la collerette de conduit 52 et sensiblement coplanaire avec cette dernière. Lorsque la butée amovible 58 est à l'état assemblé, les première et deuxième extensions 62, 70 sont sensiblement parallèles entre elles. Elles comprennent chacune un orifice 62.1, 70.1 traversé par l'élément de liaison 68.

Selon un agencement, la goulotte fixe 56 et la butée amovible 58 sont diamétralement opposées.

Selon un mode de réalisation, chaque système de connexion 48, 48' présente un plan de symétrie vertical passant par l'axe longitudinal X. Selon une configuration, chaque système de connexion 48, 48' comprend deux couples de première et deuxième extensions 62, 70 positionnées de manière symétrique par rapport au plan longitudinal vertical PVL.

La goulotte fixe 56 et la butée amovible 58 s'étendent de manière continue sur toute la circonférence du manchon 46. Selon un agencement, la goulotte fixe 56 s'étend sur plus de la moitié de la circonférence du manchon. Selon un mode de réalisation, la goulotte fixe 56 s'étend sur le demi-cercle inférieur c1 et au moins la moitié de chacun des côtés rectilignes a1, a2 de la circonférence du manchon 46. En complément, la butée amovible 58 s'étend sur le demi-cercle supérieur c2 et sur moins de la moitié de chacun des côtés rectilignes a1, a2. Ainsi, lorsque la butée amovible 58 est à l'état assemblé, la goulotte fixe 56 et la butée amovible 58 s'étendent de manière continue sur toute la circonférence du manchon 46.

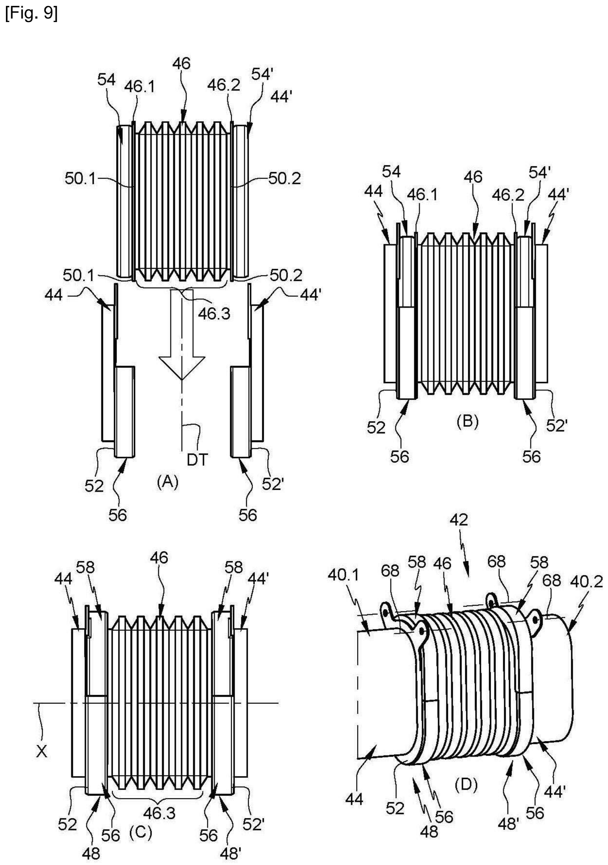

La mise en place du manchon 46 est illustrée sur la figure 9. Avant sa mise en place du manchon 46, les butées amovibles 58 sont à l'état désassemblé. Le manchon 46 est positionné de sorte que la première collerette de manchon 50.1 et le premier joint annulaire d'étanchéité 54 soient positionnés à l'aplomb de la goulotte fixe 56 du premier tronçon de conduit 44 et que la deuxième collerette de manchon 50.2 et le deuxième joint annulaire d'étanchéité 54' soient positionnés à l'aplomb de la goulotte fixe 56 du deuxième tronçon de conduit 44', comme illustré sur la partie (A) de la figure 9. En suivant, le manchon 46 est translaté vers le bas de sorte que la première collerette de manchon 50.1 et le premier joint annulaire d'étanchéité 54 soient partiellement logés dans la goulotte fixe 56 du premier tronçon de conduit 44 et que la deuxième collerette de manchon 50.2 et le deuxième joint annulaire d'étanchéité 54' soient partiellement logés dans la goulotte fixe 56 du deuxième tronçon de conduit 44', comme illustré sur la partie (B) de la figure 9.

Les butées amovibles 58 des premier et deuxième systèmes de connexion 48, 48' sont positionnées de manière à coiffer, à chaque extrémité 46.1, 46.2 du manchon 46, la première ou deuxième collerette de manchon 50.1, 50.2 et le premier ou deuxième joint annulaire d'étanchéité 54, 54', comme illustré sur la partie (C) de la figure 9. Enfin, les éléments de liaison 68 sont mis en place pour immobiliser les butées amovibles 58 en reliant chaque première extension 62 de chaque butée amovible 58 à la deuxième extension 70 solidaire du premier ou deuxième tronçon d'extrémité 44, 44'.

Cette conception du manchon 46 et des systèmes de connexion 48, 48' simplifie la mise en place du manchon 46, et ce même dans une zone exiguë comme le raccordement d'une canalisation de ventilation au bas d'un meuble positionné dans une soute avionique.

## Revendications

1. Dispositif de raccordement comprenant au moins un premier tronçon de conduit (44), au moins un manchon (46) qui présente un axe longitudinal (X) et s'étend entre des première et deuxième extrémités (46.1, 46.2), ainsi qu'un premier système de connexion (48) reliant le manchon (46) et le premier tronçon de conduit (44) ; **caractérisé en ce que** le manchon (46) comprend au moins une première collerette de manchon (50.1) positionnée à une des première et deuxième extrémités (46.1, 46.2) et **en ce que** le premier système de connexion (48) comprend au moins une goulotte fixe (56) reliée au premier tronçon de conduit (44), ouverte en direction de l'axe longitudinal (X) et configurée pour loger partiellement au moins la première collerette de manchon (50.1) du manchon (46) ainsi qu'au moins une butée amovible (58) configurée pour occuper un état assemblé dans lequel ladite butée amovible (58) est reliée au premier tronçon de conduit (44) et maintient une partie de la première collerette de manchon (50.1) dans la goulotte fixe (56) et un état désassemblé dans lequel la butée amovible (58) n'est plus reliée au premier tronçon de conduit (44) et permet à la partie de la première collerette de manchon (50.1) positionnée dans la goulotte fixe (56) de sortir de ladite goulotte fixe (56).

2. Dispositif de raccordement selon la revendication 1, **caractérisé en ce que** la goulotte fixe (56) comprend des première et deuxième parois (56.1, 56.2) ainsi qu'un fond (56.3) reliant les première et deuxième parois (56.1, 56.2), la première paroi (56.1) étant reliée au premier tronçon de conduit (44).

3. Dispositif de raccordement selon l'une des revendications précédentes, **caractérisé en ce que** la butée amovible (58) comprend une paroi latérale (60) sensiblement parallèle à l'axe longitudinal (X) ainsi qu'au moins une première extension (62) configurée pour être reliée au premier tronçon de conduit (44) lorsque la butée amovible (58) est à l'état assemblé.

4. Dispositif de raccordement selon la revendication précédente, **caractérisé en ce que** la butée amovible (58) comprend une aile (64), la paroi latérale (60) étant intercalée entre la première extension (62) et l'aile (64) et reliée à ces dernières.

5. Dispositif de raccordement selon la revendication précédente, **caractérisé en ce que** le premier tronçon de conduit (44) comprend une collerette de conduit (52) et **en ce que** la collerette de conduit (52), la paroi latérale (60) et l'aile (64) forment une deuxième goulotte (66) ouverte en direction de l'axe longitudinal (X) et configurée pour partiellement loger au moins la première collerette de manchon (50.1) du manchon (46) lorsque la butée amovible (58) est à l'état assemblé.

6. Dispositif de raccordement selon l'une des revendications 3 à 5, **caractérisé en ce que** le système de connexion (48) comprend au moins un élément de liaison (68) configuré pour relier la butée amovible (58) et le premier tronçon de conduit (44) et **en ce que**, pour chaque élément de liaison (68), la butée amovible (58) et le premier tronçon de conduit (44) comprennent respectivement des première et deuxième extensions (62, 70) qui comportent chacune un orifice traversant (62.1, 70.1) traversé par l'élément de liaison (68).

7. Dispositif de raccordement selon l'une des revendications précédentes, **caractérisé en ce que** chaque système de connexion (48) présente un plan de symétrie vertical passant par l'axe longitudinal (X).

8. Dispositif de raccordement selon l'une des revendications précédentes, **caractérisé en ce que** le manchon (46) présente une section transversale oblongue comprenant deux côtés rectilignes (a1, a2) opposés et des demi-cercles supérieur et inférieur (c1, c2) reliant les côtés rectilignes (a1, a2), la goulotte fixe (56) s'étendant sur le demi-cercle inférieur (c1) et au moins la moitié de chacun des côtés rectilignes (a1, a2), la butée amovible (58) s'étendant sur le demi-cercle supérieur (c2) et sur moins de la moitié de chacun des côtés rectilignes (a1, a2).

9. Dispositif de raccordement selon l'une des revendications précédentes, **caractérisé en ce que** le dispositif de raccordement comprend des premier et deuxième tronçons de conduit (44, 44'), un manchon (46) intercalé entre les premier et deuxième tronçons de conduit (44, 44') ainsi que **des premier** et deuxième systèmes de connexion (48, 48') reliant respectivement le manchon (46) et les premier et deuxième tronçons de conduit (44, 44'), les premier et deuxième systèmes de connexion (48, 48') étant symétriques par rapport à un plan médian transversal (PMT).

10. Dispositif de raccordement selon l'une des revendications précédentes, **caractérisé en ce que** le manchon (46) comprend une partie centrale (46.3) située entre les première et deuxième extrémités (46.1, 46.2), extensible et configurée pour se déformer de manière élastique.

11. Aéronef comprenant au moins une canalisation pourvue d'au moins un dispositif de raccordement selon l'une des revendications précédentes.
